# EUROPÄISCHE PATENTSCHRIFT

(11) **EP 2 057 053 B1**
(45) Veröffentlichungstag und Bekanntmachung des Hinweises auf die Patenterteilung: **29.09.2010**
(21) Anmeldenummer: 07787354.5
(22) Anmeldetag: 11.07.2007
(51) Int. Cl.: B60W 30/14, B60W 50/08

(54) **FAHRERASSISTENZSYSTEM**
DRIVER ASSISTANCE SYSTEM
SYSTEME D' ASSISTANCE DU CONDUCTEUR

(30) Priorität: 23.08.2006 DE 102006039583
(43) Veröffentlichungstag der Anmeldung: 13.05.2009
(73) Patentinhaber: Robert Bosch GmbH, 70442 Stuttgart (DE)
(72) Erfinder: BECKER, Jan-Carsten, 71701 Schwieberdingen (DE)
(86) Internationale Anmeldenummer: PCT/EP2007/057080
(87) Internationale Veröffentlichungsnummer: WO 2008/022845

(56) Entgegenhaltungen:
- EP-A- 0 927 677
- EP-A- 1 122 467
- EP-A- 1 302 356
- DE-A1-102005 026 479
- US-A1- 2007 145 819
- US-B1- 6 219 604

## Beschreibung

### Stand der Technik

Die Erfindung betrifft ein Fahrerassistenzsystem nach dem Oberbegriff des Anspruchs 1.

Im Bereich der Fahrerassistenzsysteme ist das dynamische Fahrgeschwindigkeitsregelsystem ACC (ACC = Adaptive Cruise Control), zumindest für einen auf Autobahnen und gut ausgebaute Landstraßen begrenzten Einsatzbereich, bereits erfolgreich in eine Serienanwendung umgesetzt. Weitere Assistenzfunktionen, wie zum Beispiel LDW (Lane Departure Warning), LKS (Lane Keeping Support, LCA (Lane Change Assistant), sind bereits für die Applikation in Serienfahrzeugen vorgesehen. Für die Realisierung dieser Assistenzfunktionen umfasst ein Fahrerassistenzsystem Umfeldsensoren wie Radarsensoren, Lidarsensoren, Laserscanner, Videosensoren und Ultraschallsensoren. Sofern ein Fahrzeug mit einem Navigationssystem ausgerüstet ist, greift das Fahrerassistenzsystem auch auf Daten dieses Systems zurück. Weiterhin kann das mit dem Bordnetz des Fahrzeugs vorzugsweise über mindestens einen BUS, vorzugsweise den CAN-BUS, verbundene Fahrerassistenzsystem auch aktiv in Bordsysteme, wie insbesondere das Lenksystem, das Bremssystem, den Antriebsstrang und Wamsysteme eingreifen. Fahrer, die mit diesen neuartigen Funktionen konfrontiert werden, fühlen sich anfangs häufig überfordert und unwohl, da sie den Eindruck haben, dass sie von dem Fahrzeug entmündigt werden, weil viele, eigentlich der Sicherheit des Fahrers dienende Funktionen, ohne Zutun des Fahrers ablaufen.

Aus EP 1 122 467 A1 ist ein Verfahren zur Steuerung der Wechsel der Übersetzungsverhältnisse eines Automatikgetriebes für Kraftfahrzeuge, nach der Oberbegriff des Anspruchs 1, mit folgenden Schritten bekannt:
- Bestimmung durch ein elektronisches Überwachungssystem einer Information, die für das Übersetzungsverhältnis repräsentativ ist, das von einer Steuerregel verlangt wird, die Zwischengrößen berücksichtigt, wie etwa Größen, welche für die Umgebungsbedingungen und die dem Fahrer und seiner Fahrweise eigenen Charakteristiken repräsentativ sind, gespeichert und geliefert durch ein Untermodul Fahrumgebung, durch ein Untermodul "Fahrerpersonalität" bzw. durch eine Untereinheit "Fahrstil";
- Erfassung und Berücksichtigung auf bevorzugte Weise eines Eingriffs des Fahrers, der in der manuellen und gewillkürten Auswahl eines Übersetzungsverhältnisses besteht, das von dem durch das elektronische Überwachungssystem bestimmten verschieden ist. Dieses bekannte Verfahren ist **dadurch gekennzeichnet, dass** wenn der durch den Fahrer gewählte Gang mit der Steuerregel kompatibel ist, der Wechsel der Gänge ausgeführt wird und das System im automatischen Modus bleibt, und dadurch, dass, wenn das Steuersystem ermittelt, dass der ausgewählte Gang zu der Steuerregel inkompatibel ist, der Wechsel des Ganges ausgeführt wird und die Bestimmung des Übersetzungsverhältnisses automatisch und temporär vom automatischen in einen manuellen Modus umschaltet, bis ein umgekehrtes Umschalten eintritt, wenn der durch den Fahrer frei gewählte Gang zur Steuerregel kompatibel wird. Das bekannte Verfahren erlaubt es somit, die gewillkürten und manuellen Eingriffe des Fahrers des Fahrzeugs bei der Steuerung des Gangschaltmodus eines Automatikgetriebes zu berücksichtigen oder nicht. Das bekannte Verfahren beschreibt jedoch keine Einlernphase, die es einem insbesondere ungeübten Fahrer ermöglicht, sich mit den Funktionen eines Fahrerassistenzsystems vertraut zu machen.

Der Erfindung liegt die Aufgabe zugrunde, ein Fahrerassistenzsystem kundenfreundlicher auszugestalten, so dass es bei dem Fahrer eines mit dem Fahrerassistenzsystem ausgestatteten Fahrzeugs auf größere Akzeptanz stößt.

Diese Aufgabe wird gemäß Anspruch 1 durch ein Fahrerassistenzsystem mit durch Parameter bestimmten Assistenzfunktionen gelöst, wobei das Fahrerassistenzsystem durch zumindest einen variabel ausgestalteten Parameter adaptiv ausgebildet ist und wobei für einen Eingriff des Fahrerassistenzsystems unterschiedliche Eingriffsstärken vorgesehen sind und wobei während einer Lernphase eines Fahrers Eingriffe des Fahrerassistenzsystems mit einer unterhalb der maximal möglichen Eingriffsstärke durchgeführt werden.

### Vorteilhafte Wirkungen

Die Erfindung verbessert die Akzeptanz eines Fahrerassistenzsystems, indem es den Fahrer des Fahrzeugs sanft mit seinen diversen Assistenzfunktionen vertraut macht. Im vorliegenden Zusammenhang bedeutet "sanft", dass dem Fahrer eine Einlernzeit zugebilligt wird, die es ihm ermöglicht, sich mit der Funktionsweise des Fahrerassistenzsystems vertraut zu machen. Während dieser Einlernzeit reagiert das Fahrerassistenzsystem nicht mit der maximal vorgesehenen Eingriffsstärke, sondern lässt es zu, dass die Eingriffsstärke, ausgehend von einem vergleichsweise niedrigen Wert, allmählich auf den vorgesehenen Maximalwert ansteigt. In einem vorteilhaften Ausführungsbeispiel der Erfindung kann diese Einlernzeit an die Betriebsdauer des Fahrzeugs gekoppelt sein. In einer weiteren Ausführungsvariante kann die Einlernzeit an Ereignisse, nämlich die Anzahl der Engriffe des Fahrerassistenzsystems, gekoppelt sein. In einer weiteren Ausführungsvariante wird während der Einlernzeit der Beginn des Eingriffs vorgezogen und dadurch die Dauer des Eingriffs verlängert während die Eingriffsstärke zunächst reduziert ist.

Weitere Vorteile ergeben sich aus den Unteransprüchen und der Beschreibung.

### Kurze Beschreibung der Zeichnungen

Ausführungsformen der Erfindung werden nachfolgend unter Bezug auf die Zeichnung näher erläutert. Dabei zeigt
- Figur 1: ein Blockdiagramm eines Fahrerassistenzsystems;
- Figur 2: ein Diagramm mit Darstellung des funktionalen Zusammenhangs zwischen der Eingriffstärke und der Betriebszeit;
- Figur 3: ein erstes Blockdiagramm;
- Figur 4: ein zweites Blockdiagramm;
- Figur 5: ein drittes Blockdiagramm;
- Figur 6: ein viertes Blockdiagramm;
- Figur 7: ein weiteres Diagramm mit Darstellung der Eingriffsstärke als Funktion der Zeit.

### Ausführungsformen der Erfindung

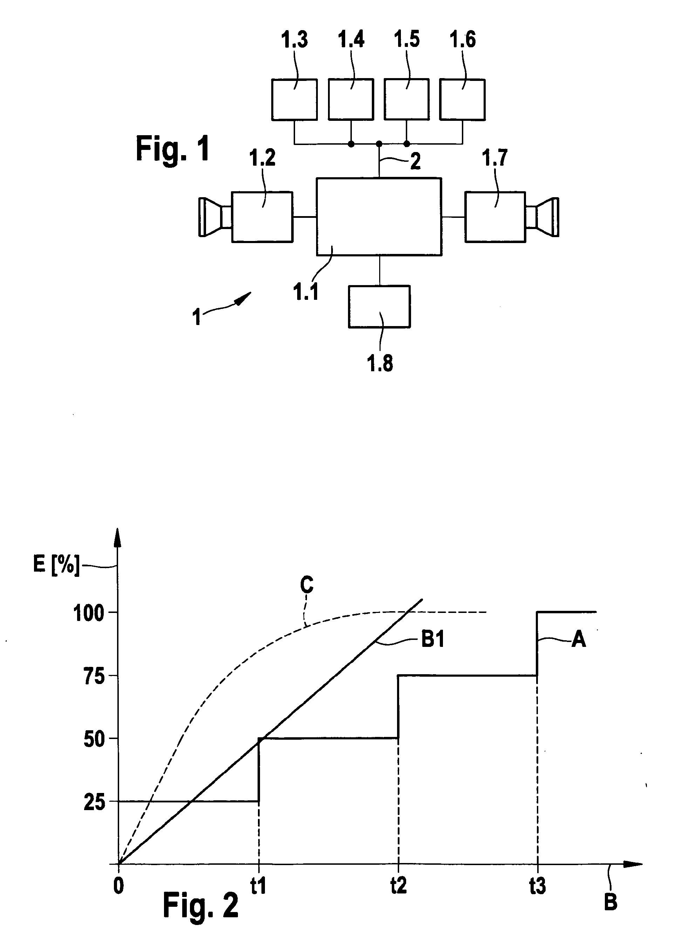

Ausführungsformen der Erfindung werden im Folgenden unter Bezug auf die Zeichnung näher erläutert. Ein Blockschaltbild eines erfindungsgemäß ausgestalteten Fahrerassistenzsystems 1 ist in Figur 1 dargestellt. Die Erfindung nutzt mindestens ein in Fahrtrichtung nach vom gerichtetes Sensorsystem 1.7 für die Spurerkennung. Dafür umfasst das Sensorsystem 1.7 beispielsweise mindestens einen Videosensor für die optische Detektion von Fahrspurmarkierungen. Das Sensorsystem 1.7 ist mit einem Steuergerät 1.1 verbunden. Das Fahrerassistenzsystem 1 kann weiterhin vorteilhaft Einrichtungen zur Entfernungsmessung wie einen Radarsensor 1.3, einen Lidarsensor 1.4, einen Laserscanner 1.5 und einen Ultraschallsensor 1.6 umfassen. Weiterhin kann das Fahrerassistenzsystem 1 ein GPS gestütztes Navigationssystem 1.8 umfassen oder mit diesem verbunden sein. Schließlich kann das Fahrerassistenzsystem 1 auch noch ein nach rückwärts gerichtetes Sensorsystem 1.2 umfassen. Das Steuergerät 1.1 und die Sensoren und das Navigationsgerät sind durch ein Bussystem 2, vorzugsweise ein CAN-Bussystem, miteinander verbunden, um eine schnelle Datenübertragung zu ermöglichen.

Im Folgenden werden Ausführungsformen der Erfindung anhand einiger konkreter Beispiele erläutert.
Ein sich anbahnender Spurwechsel des eigenen Fahrzeugs kann durch die Information über Position und Ausrichtung der Fahrspurmarkierungen relativ zu dem eigenen Fahrzeug durch die Daten des Sensorsystems für die Spurerkennung detektiert werden. Als eine wichtige Assistenzfunktion des Fahrerassistenzsystems unterstützt die Spurhaltefunktion LKS (LKS = Lane Keeping Support) den Fahrer bei der Einhaltung der gewählten Fahrspur, indem das Fahrerassistenzsystem, bei einem drohenden Verlassen der Fahrspur, durch Aufprägen eines rückstellenden Lenkmoments, in das Lenksystem des Fahrzeugs eingreift. Dies kann für untrainierte Fahrer überraschend sein und zu einer unerwünschten Gegenreaktion des Fahrers führen, der das von dem Fahrerassistenzsystem aufgebrachte Lenkmoment wieder kompensieren möchte. Die Erfindung trägt wesentlich dazu bei, dass der Fahrer, durch eine allmähliche Gewöhnung an die von dem Fahrerassistenzsystem vorgenommenen Eingriffe, Vertrauen zu dem Fahrerassistenzsystem fasst. Erfindungsgemäß werden nun die Parameter der Assistenzfunktion LKS variabel angepasst, um den Fahrer langsam an diese Assistenzfunktion zu gewöhnen. Dies kann dadurch erfolgen, dass das Fahrerassistenzsystem 1 anfangs nur eine leichte, sanft eingestellte Lenkunterstützung bietet. Hierdurch kann der Fahrer die Vorteile dieser Assistenzfunktion praktisch erfahren und sich langsam daran gewöhnen. Zunehmend kann dann das Lenkmoment, das zur Einhaltung der Fahrspur dem von dem Fahrer aufgebrachten Lenkmoment überlagert wird, gesteigert werden, bis der von dem Fahrerassistenzsystem 1 vorgesehene Maximalwert erreicht wird. Vorteilhaft kann dabei die Einlernphase an die Betriebsdauer des Fahrzeugs gekoppelt und individuell auf einen bestimmten Fahrer abgestimmt sein, indem bei einer erstmaligen Inbetriebnahme des Fahrzeugs durch einen bestimmten Fahrer anfangs nur eine leichte Lenkunterstützung aufgebracht wird, die mit zunehmender Betriebsdauer gesteigert wird, bis der vorgesehene Maximalwert erreicht ist. Die dafür erforderliche Zeit kann zweckmäßig empirisch festgelegt und beispielsweise aus Versuchsreihen abgeleitet werden. Beispielsweise kann eine Einlernzeit von einigen Stunden vorgesehen sein.

Um auch einer Situation Rechnung zu tragen, bei der auch über eine längere Betriebszeit des Fahrzeugs nur wenige Eingriffe der Assistenzfunktion LKS erfolgen, kann bei einer weiteren vorteilhaften Ausführungsform der Erfindung die Dauer der Einlernphase auch von der Anzahl der Eingriffe der Assistenzfunktion abhängig gemacht werden. Beispielsweise kann bei einer stufenförmigen Adaption der für das Lenkmoment des Fahrerassistenzsystems zuständigen Parameter, die jeweils nächste Stufe nach einer Anzahl N von Lenkeingriffen auf der zuvor eingestellten Stufe erreicht werden. Da Fahrzeuge häufig von mehreren unterschiedlichen Fahrern gefahren werden, ist auch eine Zuordnung der Einlernphase zu einem jeweiligen Fahrer zweckmäßig. Dies ist besonders einfach bei modernen Fahrzeugen durchführbar, die bereits über eine Einrichtung zur Identifizierung des jeweiligen Fahrers verfügen. Das Fahrerassistenzsystem 1 merkt sich zu diesem Zweck, welches Stadium der Einlernphase der jeweilige Fahrer bereits absolviert hat, wenn er das Fahrzeug außer Betrieb setzt. Bei der nächsten Inbetriebnahme durch den gleichen Fahrer wird die Einlernphase an der gemerkten Stelle fortgesetzt.

Ein analoger Ablauf ist bei einer Abstandsregelfunktion des Fahrerassistenzsystems, wie ACC (ACC = Automatic Cruise Control) oder bei einem Bremsassistenzsystem denkbar. Hier kann beispielsweise der von dem Fahrerassistenzsystem auf das Bremssystem des Fahrzeugs aufgeprägte Bremseingriff von niedrigen Werten ausgehend bis zu dem vorgesehenen Maximalwert gesteigert werden.

Bei einem Parkassistenzsystem werden in einer Einlernphase des Fahrerassistenzsystems nur begrenzte Stellgrößen angeboten. So werden beispielsweise zunächst größere Abstände zu anderen parkenden Fahrzeugen oder anderen Hindernissen eingehalten. Im Verlauf der Einlernphase werden dann die eingehaltenen Abstände stückweise verkleinert. Weiterhin ist es möglich, die Geschwindigkeit des Einparkvorgangs schrittweise zu erhöhen. Zunächst wird langsam eingeparkt. Dann wird die Fahrgeschwindigkeit bei dem Einparkvorgang schrittweise oder kontinuierlich erhöht.

Je nach Applikation kann die Anpassung des mindestens einen Parameters unterschiedlich funktional ausgestaltet werden. Dies wird im Folgenden unter Bezug auf Figur 2 erläutert. Das in Figur 2 dargestellte Diagramm zeigt die Eingriffsstärke E in Prozent eines Maximalwerts als Funktion der Betriebszeit B. Diese Betriebszeit B entspricht der schon erwähnten Einlernzeit, wenn einmal unterstellt wird, dass ein neuer Fahrer das neue Fahrzeug übernimmt und sich in de Folgezeit mit diesem vertraut macht. In dem Diagramm sind, beispielhaft, drei Kurven A, B1, C dargestellt, die einen funktionalen Zusammenhang zwischen der Eingriffsstärke E und der Betriebszeit B repräsentieren. Kurve A ist eine Treppenfunktion. Die Eingriffsstärke E des Fahrerassistenzsystems 1 wird also stufenweise sprunghaft verändert. Zum Zeitpunkt t = 0 beginnt die Einlernphase für den neuen Fahrer. Das Fahrerassistenzsystem 1 reagiert mit einem Anteil von 25% der maximal möglichen Eingriffsstärke. Zum Zeitpunkt t1 steigt die Eingriffsstärke E auf 50% des Maximalwerts an. Zum Zeitpunkt t2 steigt die Eingriffsstärke E weiter auf 75% des Maximalwerts an. Schließlich steigt die Eingriffsstärke E zum Zeitpunkt t3 auf 100%, also den in dem Fahrerassistenzsystem 1 vorgesehenen Maximalwert an. Die stetige Kurve B1 repräsentiert, als Variante, eine lineare Abhängigkeit der Eingriffsstärke E von der Betriebszeit B. Eine weitere Variante stellt Kurve C dar. Möglicherweise sind die Varianten gemäß den Kurven B1 und C für den Fahrer noch angenehmer, da während der Einlernphase eine allmähliche Anpassung an den Maximalwert stattfindet. Die in Figur 2 dargestellten Kurvenverläufe sind nur beispielhaft zu verstehen. Selbstverständlich ist es im Rahmen der Erfindung möglich, komplexere funktionale Zusammenhänge zu realisieren, wenn dies sich im Rahmen einer bestimmten Applikation als zweckmäßig erweist.

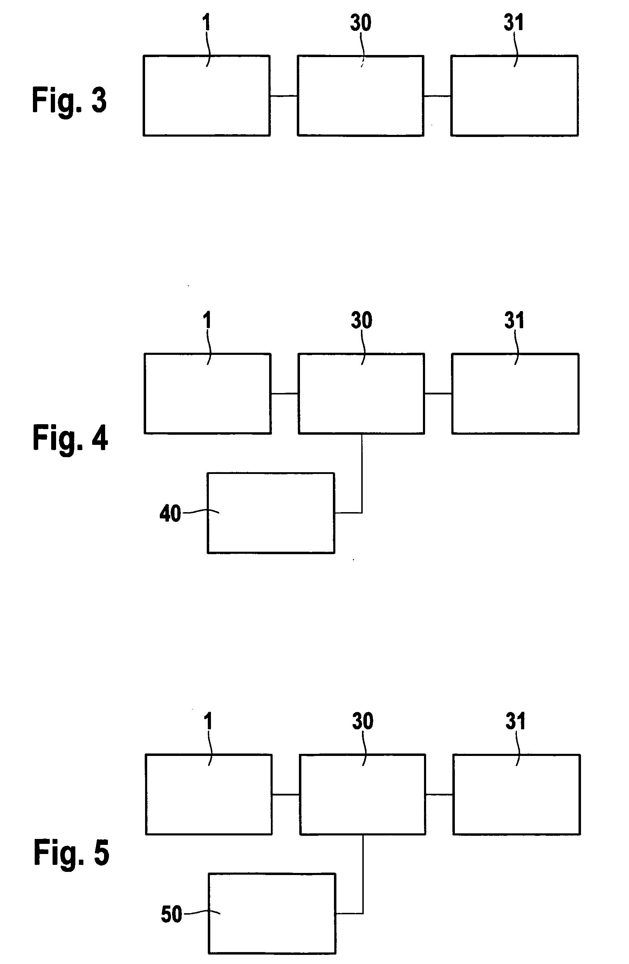

Die in den Figuren 3 bis 6 dargestellten Blockdiagramme zeigen Ausführungsformen von Fahrerassistenzsystemen der erfindungsgemäßen Art. Das Blockdiagramm in Figur 3 zeigt das Fahrerassistenzsystem 1 gemäß Figur 1 unter Weglassung der in Figur 1 dargestellten Sensoren. Das Fahrerassistenzsystem 1 ist mit einem Funktionsmodul 30 verbunden, das die beispielhaft in Figur 2 dargestellte funktionelle Abhängigkeit zwischen der Eingriffsstärke E und der Betriebsdauer B bereitstellt. Das Funktionsmodul 30 ist mit einem Funktionsmodul 31 verbunden, das als Aktor wirkt und die durch das Funktionsmodul 30 vorgesehene funktionale Abhängigkeit den entsprechenden Bordsystemen des Fahrzeugs, wie beispielsweise dem Lenksystem oder dem Bremssystem, aufprägt.

Die in Figur 5 dargestellte Ausführungsvariante umfasst zusätzlich einen mit dem Funktionsmodul 30 verbundenen Zähler 50, der die Betriebsdauer B des Fahrzeugs erfasst und in Abhängigkeit davon die Eingriffsstärke E steuert.

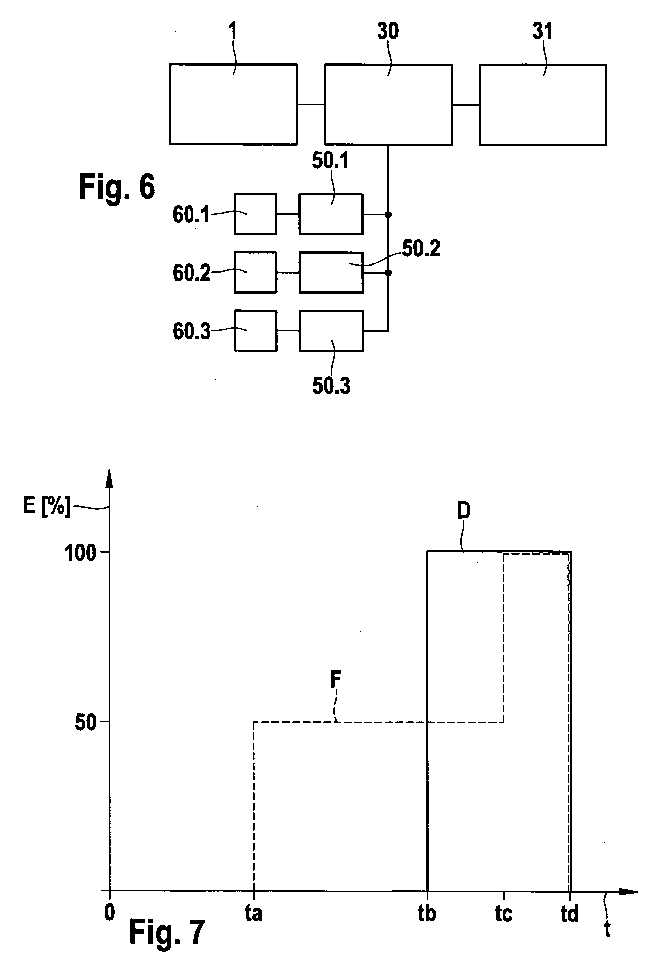

In der in Figur 6 dargestellten Ausführungsvariante sind mehrere unterschiedlichen Fahrern zugeordnete Zähler 50.1, 50.2, 50.3 vorgesehen. Diese sind jeweils mit Einrichtungen 60.1, 60.2, 60.3 für die Identifikation unterschiedlicher Fahrer verbunden. Je nachdem welcher Fahrer das Fahrzeug in Betrieb nimmt, wird über die entsprechende Einrichtung 60.1, 60.2,60.3 der jeweilige Zähler 50.1, 50.2, 50.3 ausgewählt, der wiederum über das Funktionsmodul 30 die dem betreffenden Fahrer zugeordnete Einlernphase steuert.

Analog können die oben an die Betriebszeit gekoppelten Vorgänge auch ereignisgesteuert ablaufen. Hierzu würde ein Zähler, beispielsweise der Zähler 40 in Figur 4, die Anzahl der Eingriffe des Fahrerassistenzsystems 1 zählen. In Abhängigkeit von der Anzahl der Ereignisse würde dann, nach einer vorgegebenen funktionalen Abhängigkeit der Eingriffsstärke E von der Anzahl der Ereignisse, die Eingriffsstärke E gesteuert werden.

Bei einer weiteren Ausführungsform der Erfindung kann eine Gewöhnung an einen Eingriff des Fahrerassistenzsystems während einer Einlernphase auch dadurch erreicht werden, dass der Beginn eines Eingriffs zeitlich vorgezogen und der Eingriff selbst zunächst mit verminderter Stärke durchgeführt wird. Dies wird im Folgenden am Beispiel einer Bremsassistenzfunktion unter Bezug auf Figur 7 erläutert. Figur 7 zeigt, in einem Diagramm, die Eingriffsstärke E als Funktion der Eingriffsdauer. Dabei sind auf der Abszisse des Koordinatensystems die Zeit t und auf der Ordinate die Eingriffsstärke E in Prozent aufgetragen. Die Kurve D repräsentiert einen üblichen Bremseingriff bei einem bereits trainierten Fahrer. Der Bremseingriff beginnt zu dem Zeitpunkt tb und dauert bis zu dem Zeitpunkt td, wobei der Bremseingriff mit maximaler Stärke erfolgt. Die Kurve F verdeutlicht den Bremseingriff bei einem noch nicht trainierten Fahrer. Hierbei beginnt der Bremseingriff bereits zu einem früheren Zeitpunkt ta und mit verminderter Stärke von, zum Beispiel, 50% des maximalen Werts. Erst zu dem Zeitpunkt tc steigt die Eingriffsstärke E auf einen höheren Wert, hier den Maximalwert, an, der bis zu dem Zeitpunkt td beibehalten wird. Durch die niedrigere Eingriffsstärke fällt es dem untrainierten Fahrer leichter, sich an die Eingriffe des Fahrerassistenzsystems zu gewöhnen. Mit zunehmender Einlernzeit kann der Beginn des Eingriffs immer näher an den Zeitpunkt tb herangerückt werden, während die Eingriffsstärke, von Eingriff zu Eingriff. gesteigert wird.

## Patentansprüche

1. Fahrerassistenzsystem mit durch Parameter bestimmten Assistenzfunktionen, wobei das Fahrerassistenzsystem durch zumindest einen variabel ausgestalteten Parameter adaptiv ausgebildet ist, **dadurch gekennzeichnet, dass** für einen Eingriff des Fahrerassistenzsystems unterschiedliche Eingriffsstärken vorgesehen sind und dass während einer Lernphase eines Fahrers Eingriffe des Fahrerassistenzsystems mit einer unterhalb der maximal möglichen Eingriffsstärke durchgeführt werden.

2. Fahrerassistenzsystem nach einem der vorhergehenden Ansprüche, **dadurch gekennzeichnet, dass** der zumindest eine Parameter zeitabhängig variabel ist.

3. Fahrerassistenzsystem nach einem der vorhergehenden Ansprüche, **dadurch gekennzeichnet, dass** der zumindest eine Parameter ereignisabhängig variabel ist.

4. Fahrerassistenzsystem nach einem der vorhergehenden Ansprüche, **dadurch gekennzeichnet, dass** der zumindest eine Parameter fahrerindividuell veränderbar ist.

5. Fahrerassistenzsystem nach einem der vorhergehenden Ansprüche, **dadurch gekennzeichnet, dass** der zumindest eine Parameter nach einer stetigen Kennlinie veränderbar ist.

6. Fahrerassistenzsystem nach einem der vorhergehenden Ansprüche, **dadurch gekennzeichnet, dass** der zumindest eine Parameter gemäß einer linearen Funktion (B,C) veränderbar ist.

7. Fahrerassistenzsystem nach einem der vorhergehenden Ansprüche, **dadurch gekennzeichnet, dass** der zumindest eine Parameter gemäß einer nichtlinearen Funktion (C) veränderbar ist.

8. Fahrerassistenzsystem nach einem der vorhergehenden Ansprüche, **dadurch gekennzeichnet, dass** der zumindest eine Parameter gemäß einer Treppenfunktion (A) veränderbar ist.

9. Fahrerassistenzsystem nach einem der vorhergehenden Ansprüche, **dadurch gekennzeichnet, dass** bei der Assistenzfunktion LKS das von dem Fahrerassistenzsystem (1) aufgebrachte Lenkmoment veränderbar ist.

10. Fahrerassistenzsystem nach einem der vorhergehenden Ansprüche, **dadurch gekennzeichnet, dass** bei der Assistenzfunktion ACC das von dem Fahrerassistenzsystem (1) aufgebrachte Bremsmoment veränderbar ist.

11. Fahrerassistenzsystem nach einem der vorhergehenden Ansprüche, **dadurch gekennzeichnet, dass** bei einem Parkassistenzsystem in einer Einlernphase zunächst ein größerer Abstand zu anderen parkenden Fahrzeugen oder Hindernissen eingehalten wird, der mit zunehmender Erfahrung des Fahrers verringert wird.

12. Fahrerassistenzsystem nach einem der vorhergehenden Ansprüche, **dadurch gekennzeichnet, dass** bei einem Parkassistenzsystem in einer Einlernphase ein Einparkvorgang zunächst mit geringerer Geschwindigkeit durchgeführt wird, und dass die Geschwindigkeit mit zunehmender Erfahrung des Fahrers gesteigert wird.

13. Fahrerassistenzsystem nach einem der vorhergehenden Ansprüche, **dadurch gekennzeichnet, dass** bei einem untrainierten Fahrer ein Eingriff zeitlich eher als bei einem trainierten Fahrer beginnt und zumindest während eines Teils der Eingriffsdauer mit verminderter Eingriffsstärke durchgeführt wird.

## Claims

1. Driver assistance system with assistance functions which are determined by parameters, wherein the driver assistance system is designed to be adapted by means of at least one variably configured parameter, **characterized in that** different intervention intensities are provided for an intervention by the driver assistance system, and **in that**, during a learning phase of a driver, interventions of the driver assistance system are carried out with an intervention intensity which is below the maximum possible one.

2. Driver assistance system according to one of the preceding claims, **characterized in that** the at least one parameter can be varied as a function of time.

3. Driver assistance system according to one of the preceding claims, **characterized in that** the at least one parameter is variable as a function of events.

4. Driver assistance system according to one of the preceding claims, **characterized in that** the at least one parameter can be varied on a driver-specific basis.

5. Driver assistance system according to one of the preceding claims, **characterized in that** the at least one parameter can be varied according to a continuous characteristic line.

6. Driver assistance system according to one of the preceding claims, **characterized in that** the at least one parameter can be varied according to a linear function (B, C).

7. Driver assistance system according to one of the preceding claims, **characterized in that** the at least one parameter can be varied according to a non-linear function (C).

8. Driver assistance system according to one of the preceding claims, **characterized in that** the at least one parameter can be varied according to a step function (A).

9. Driver assistance system according to one of the preceding claims, **characterized in that** in the assistance function LKS the steering torque which is applied by the driver assistance system (1) can be varied.

10. Driver assistance system according to one of the preceding claims, **characterized in that** in the assistance function ACC the braking torque which is applied by the driver assistance system (1) can be varied.

11. Driver assistance system according to one of the preceding claims, **characterized in that** in a parking assistance system in a learning phase initially a relatively large distance from other parked vehicles or obstacles is maintained and said distance is reduced as the driver gains experience.

12. Driver assistance system according to one of the preceding claims, **characterized in that** in a learning phase in a parking assistance system a parking process is initially carried out at a relatively low speed, and **in that** the speed is increased as the driver gains experience.

13. Driver assistance system according to one of the preceding claims, **characterized in that** in the case of an untrained driver an intervention starts chronologically earlier than in the case of a trained driver and is carried out with a reduced intervention intensity at least during part of the intervention duration.

## Revendications

1. Système d'assistance au conducteur qui présente des fonctions d'assistance définies par des paramètres,
le système d'assistance au conducteur pouvant être configuré de manière adaptative par au moins un paramètre variable,
**caractérisé en ce que**
différentes intensités d'intervention sont prévues pour une intervention du système d'assistance au conducteur et
**en ce que** pendant une phase d'apprentissage d'un conducteur, des interventions du système d'assistance au conducteur sont exécutées à une intensité d'intervention plus basse que l'intensité d'intervention maximale possible.

2. Système d'assistance au conducteur selon l'une des revendications précédentes, **caractérisé en ce que** le ou les paramètres peuvent varier en fonction du temps.

3. Système d'assistance au conducteur selon l'une des revendications précédentes, **caractérisé en ce que** le ou les paramètres peuvent varier en fonction d'un résultat.

4. Système d'assistance au conducteur selon l'une des revendications précédentes, **caractérisé en ce que** le ou les paramètres peuvent être modifiés en fonction du conducteur particulier.

5. Système d'assistance au conducteur selon l'une des revendications précédentes, **caractérisé en ce que** le ou les paramètres peuvent être modifiés selon une ligne caractéristique constante.

6. Système d'assistance au conducteur selon l'une des revendications précédentes, **caractérisé en ce que** le ou les paramètres peuvent être modifiés en fonction d'une fonction linéaire (B, C).

7. Système d'assistance au conducteur selon l'une des revendications précédentes, **caractérisé en ce que** le ou les paramètres peuvent être modifiés en fonction d'une fonction non linéaire (C).

8. Système d'assistance au conducteur selon l'une des revendications précédentes, **caractérisé en ce que** le ou les paramètres peuvent être modifiés en fonction d'une fonction en.escalier (A).

9. Système d'assistance au conducteur selon l'une des revendications précédentes, **caractérisé en ce que** dans la fonction d'assistance LKS, le couple de direction qui peut être appliqué par le système (1) d'assistance au conducteur peut être modifié.

10. Système d'assistance au conducteur selon l'une des revendications précédentes, **caractérisé en ce que** dans la fonction d'assistance ACC, le couple de freinage appliqué par le système (1) d'assistance au conducteur peut être modifié.

11. Système d'assistance au conducteur selon l'une des revendications précédentes, **caractérisé en ce que** dans un système d'assistance au stationnement, la distance respectée par rapport à d'autres véhicules exécutant une manoeuvre de stationnement ou obstacles est d'abord assez grande dans une phase d'apprentissage et diminue lorsque l'expérience du conducteur augmente.

12. Système d'assistance au conducteur selon l'une des revendications précédentes, **caractérisé en ce que** dans un système d'assistance au stationnement, une manoeuvre de stationnement est d'abord exécutée à basse vitesse dans une phase d'apprentissage et **en ce que** la vitesse est augmentée lorsque l'expérience du conducteur augmente.

13. Système d'assistance au conducteur selon l'une des revendications précédentes, **caractérisé en ce que** lorsque le conducteur n'est pas expérimenté, une intervention commence plus tôt qu'avec un conducteur expérimenté et est exécutée à une intensité d'intervention réduite au moins pendant une partie de la durée de l'intervention.
